# EUROPÄISCHE PATENTSCHRIFT

(11) **EP 1 200 338 B1**
(45) Veröffentlichungstag und Bekanntmachung des Hinweises auf die Patenterteilung: **24.03.2004**
(21) Anmeldenummer: 00936797.0
(22) Anmeldetag: 25.05.2000
(51) Int. Cl.: C01B 3/36, F23D 23/00

(54) **BRENNER FÜR DIE PARTIELLE OXIDATION VON FLÜSSIGEN, KOHLENSTOFFHALTIGEN BRENNSTOFFEN**
BURNER FOR THE PARTIAL OXIDATION OF LIQUID FUELS WHICH CONTAIN CARBON
BRULEUR POUR L'OXYDATION PARTIELLE DE COMBUSTIBLES LIQUIDES CARBONES

(30) Priorität: 07.07.1999 DE 19931373
(43) Veröffentlichungstag der Anmeldung: 02.05.2002
(73) Patentinhaber: MG Technologies AG, 60325 Frankfurt am Main (DE)
(72) Erfinder: BREHM, Lothar, D-60599 Frankfurt am Main (DE); LIEBNER, Waldemar, D-61440 Oberursel (DE); QUASS, Gunter, D-60435 Frankfurt am Main (DE); ZWIEFELHOFER, Uwe, D-61267 Neu-Anspach (DE); WEBER, Roland, D-02997 Wittichenau (DE)
(86) Internationale Anmeldenummer: PCT/EP2000/004755
(87) Internationale Veröffentlichungsnummer: WO 2001/004047

(56) Entgegenhaltungen:
- EP-A- 0 397 046
- EP-A- 0 406 071
- AT-B- 369 345
- GB-A- 2 197 714
- US-A- 4 933 163

## Beschreibung

Die Erfindung betrifft einen Brenner für die partielle Oxidation von flüssigem, kohlenstoffhaltigem Brennstoff mit Wasserdampf und einem sauerstoffhaltigen Gas.

Brenner dieser Art, die in eine Brennkammer gerichtet sind, kennt man z. B. aus EP 0 127 273 B1, dem US-Patent 4 933 163 und EP 0 707 880 A1. Aus der letztgenannten Veröffentlichung ist auch die Anordnung eines solchen Brenners am Eingang einer leeren Brennkammer bekannt, wobei das erzeugte rohe Produktgas anschließend gereinigt und z. B. zu einem Synthesegas weiterverarbeitet wird.

Der Erfindung liegt die Aufgabe zugrunde, einen Brenner für die partielle Oxidation von flüssigen Brennstoffen, wie z. B. Schweröl, zu schaffen, der für hohe Durchsatzleistungen geeignet ist und gleichzeitig ein kostengünstiges Arbeiten ermöglicht. Erfindungsgemäß wird dies dadurch erreicht, daß mindestens zwei Brennstoff führende Rohre etwa parallel angeordnet sind, wobei der Abstand benachbarter, Brennstoff führender Rohre 5 bis 30 cm beträgt, daß jedes Brennstoff führende Rohr von einem Wasserdampf führenden Rohr umgeben ist, daß jedes Wasserdampf führende Rohr an seinem Mündungsende eine Zuleitung für sauerstoffhaltiges Gas aufweist und daß die Wasserdampf führenden Rohre von einer gemeinsamen ersten Kühlkammer umgeben sind, durch welche man Kühlflüssigkeit leitet, wobei die erste Kühlkammer als Ringkammer ausgebildet ist und bis in den Bereich der Mündungsenden der Wasserdampf führenden Rohre reicht. Die Anzahl der Brennstoff führenden Rohre liegt üblicherweise im Bereich von 2 bis 20 und vorzugsweise 3 bis 12.

Durch die gemeinsame erste Kühlkammer ergibt sich eine kompakte, relativ einfache Konstruktion des Brenners, gleichzeitig wird für ausreichende Kühlung des Bereichs der Mündungsenden der Wasserdampf führenden Rohre gesorgt, die den hohen Temperaturen in der Brennkammer ausgesetzt sind. Dort, wo das sauerstoffhaltige Gas mit dem Brennstoff zusammentrifft, treten örtlich Temperaturen bis etwa 1700°C auf. Zweckmäßigerweise wird koaxial zur ersten Kühlkammer eine gemeinsame zweite Kühlkammer angeordnet, die von der ersten Kühlkammer umgeben ist. Dabei kann es sich empfehlen, wenn zwischen der ersten und zweiten Kühlkammer mindestens ein Verbindungskanal für Kühlflüssigkeit vorgesehen ist.

Eine Weiterentwicklung des Brenners besteht darin, daß innerhalb des Bereichs der ersten Kühlkammer mindestens ein Kanal für einen einsetzbaren und entfernbaren Hilfsbrenner vorgesehen ist. Dieser Hilfsbrenner kann z. B. nur in der Anfahrphase des Vergasungsbetriebs zum Einsatz kommen, und er wird während des Dauerbetriebs aus der Brenneranordnung entfernt.

Als flüssiger, kohlenstoffhaltiger Brennstoff kommt z. B. Schweröl, eine pumpfähige Aufschlämmung körniger Kohle oder Petrolkoks in Wasser oder in flüssigen Kohlenwasserstoffen, sowie eine Emulsion von Bitumen oder Asphalt in Wasser infrage. Als O₂-haltiges Gas verwendet man üblicherweise technisch reinen Sauerstoff oder mit Sauerstoff angereicherte Luft, wenn der Stickstoffgehalt nicht stört.

Ausgestaltungsmöglichkeiten des Brenners werden mit Hilfe der Zeichnung erläutert. Es zeigt:
- Fig. 1: einen Längsschnitt durch den Brenner in schematischer Darstellung, geschnitten nach der Linie I-I in Fig. 2 und
- Fig. 2: einen Querschnitt durch den Brenner der Fig. 1, geschnitten nach der Linie II-II.

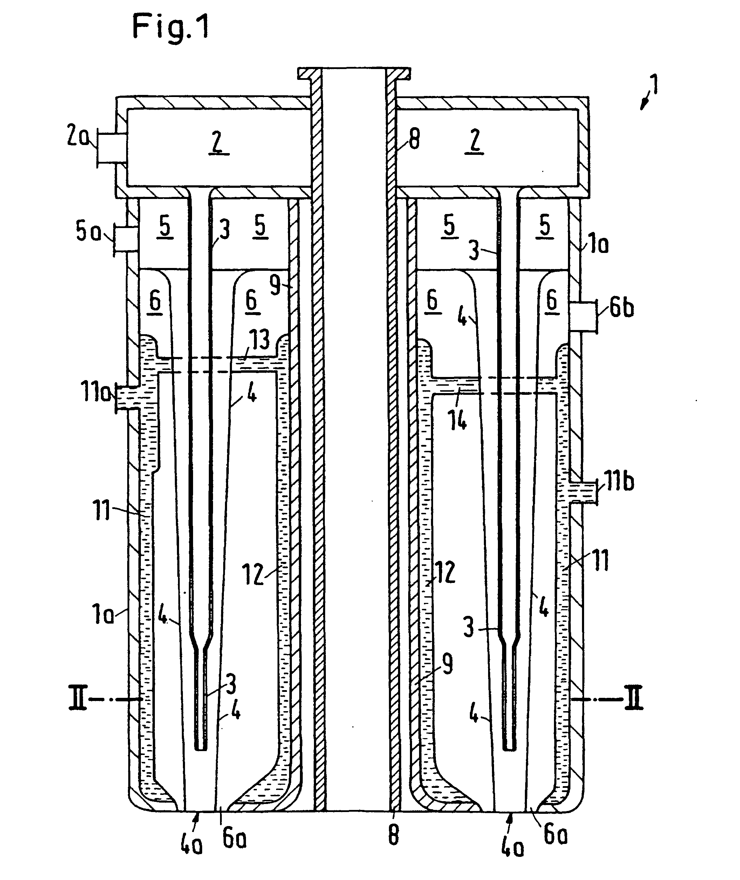

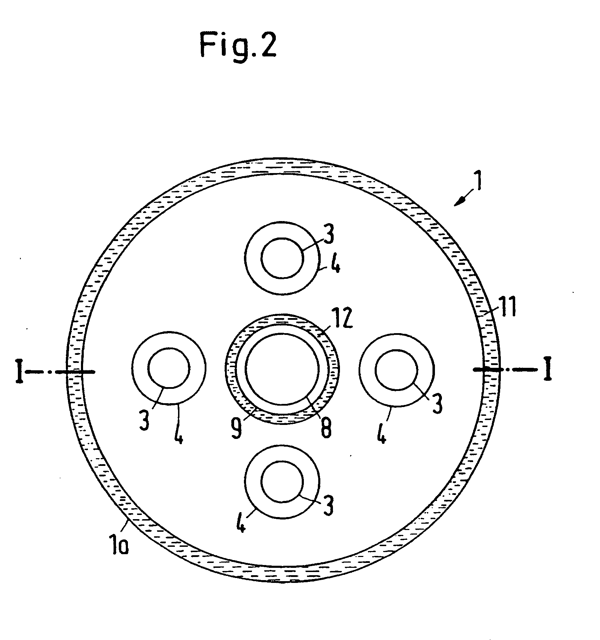

Der Brenner (1) weist eine Verteilkammer (2) für flüssigen Brennstoff auf, die hier auch als erste Verteilkammer bezeichnet wird. Der flüssige Brennstoff wird durch den Eintrittsstutzen (2a) herangeführt und durch die Brennstoff führenden Rohre (3) ausgepreßt. Im vorliegenden Fall sind mit der Verteilkammer (2) vier Brennstoff führende Rohre (3) verbunden, vergleiche Fig. 2, von denen in Fig. 1 zwei Rohre zu sehen sind. Jedes Rohr (3) ist von einem Wasserdampf führenden Rohr (4) koaxial umgeben. Die sich zum Mündungsende (4a) hin konisch verjüngende Form der Rohre (4) ist nicht zwingend erforderlich. Der Wasserdampf wird durch einen Einlaß (5a) herangeführt und tritt zunächst in eine zweite Verteilkammer (5) ein, bevor er durch die Rohre (4) ausströmt. Im Mündungsbereich (4a) mischen sich zerstäubter Brennstoff und Wasserdampf, bevor das Gemisch aus dem Brenner austritt. Durch Ringschlitze (6a) wird dem Gemisch sauerstoffhaltiges Gas zugegeben, welches für die partielle Oxidation erforderlich ist. Das sauerstoffhaltige Gas kommt aus einer dritten Verteilkammer (6) und wird durch den Eintrittsstutzen (6b) herangeführt.

Im Zentralbereich des Brenners (1) ist ein zylindrischer Kanal (8) vorgesehen, in welchen man bei Bedarf z. B. einen Hilfsbrenner, etwa für die Anfahrphase, einschieben kann. Wenn der Hilfsbrenner nicht mehr gebraucht wird, kann man ihn aus dem Kanal (8) entfernen und den Kanal mit einem nicht dargestellten Deckel verschließen. Der Kanal (8) wird von einer zylindrischen Wand (9) umgeben, die mit einer Kühlkammer (12) in Kontakt steht. Die Kühlkammer (12), die als Ringkammer ausgebildet ist und den Kanal (8) und die Zylinderwand (9) umgibt, wird hier als zweite Kühlkammer bezeichnet. Die erste Kühlkammer (11) liegt an der Innenseite des Brennergehäuses (1a) an, welches etwa zylindrische Form hat. Die Kühlflüssigkeit, z. B. Wasser, wird durch den Einlaß (11a) herangeführt und tritt durch den Auslaß (11b) aus. Zwischen der ersten Kühlkammer (11) und der zweiten Kühlkammer (12) gibt es die beiden Verbindungskanäle (13) und (14), welche jeweils an einem Wasserdampf führenden Rohr (4) vorbeigeführt sind. Zur besseren optischen Verdeutlichung sind die von Kühlflüssigkeit durchströmten Teile des Brenners punktiert dargestellt. Nicht dargestellte Strömungshindernisse in den Kühlkammern sorgen dafür, daß die Kühlflüssigkeit bevorzugt einen Strömungsweg nimmt, wie er für die gewünschten Temperaturen notwendig ist. Insbesondere wird dafür gesorgt, daß die Kühlwirkung auch in der Nähe des Mündungsbereichs (4a) des Brenners in ausreichendem Maße vorhanden ist.

In der Zeichnung, die den Brenner nur schematisch wiedergibt, wurden Abstandselemente zwischen den verschiedenen Teilen weggelassen, um die Übersichtlichkeit der Darstellung nicht zu beeinträchtigen.

Im vorliegenden Fall sind innerhalb der ersten Kühlkammer (11) vier Brennstoff führende Rohre (3) mit den zugehörigen Wasserdampf führenden Rohren (4) angeordnet, doch kann die Anzahl der Rohre (3) mit zugehörigen Rohren (4) zwischen 2 und 20 und vorzugsweise 3 und 12 liegen. Dabei kann es sich empfehlen, diese Rohre im Bereich zwischen der ersten und zweiten Kühlkammer anzuordnen und dabei im Zentralbereich einen Kanal (8) für den Hilfsbrenner vorzusehen. Dieser Kanal (8) ist jedoch nicht in allen Fällen nötig.

## Patentansprüche

1. Brenner für die partielle Oxidation von flüssigem, kohlenstoffhaltigem Brennstoff mit Wasserdampf und einem sauerstoffhaltigen Gas, mit mindestens zwei Brennstoff führende Rohre (3) die etwa parallel angeordnet sind, wobei der Abstand benachbarter, Brennstoff führender Rohre 5 bis 30 cm beträgt, wobei jedes Brennstoff führende Rohr von einem Wasserdampf führenden Rohr (4) umgeben ist und dass jedes Wasserdampf führende Rohr an seinem Mündungsende (4a) eine Zuleitung für sauerstoffhaltiges Gas aufweist und dass die Wasserdampf führenden Rohre von einer gemeinsamen ersten Kühlkammer (11) umgeben sind, durch welche man Kühlflüssigkeit leitet, wobei die erste Kühlkammer als Ringkammer ausgebildet ist und bis in den Bereich der Mündungsenden der Wasserdampf führenden Rohre reicht, **dadurch gekennzeichnet, dass** mindestens ein Kanal (8) für einen einsetzbaren und entfernbaren Hilfsbrenner vorgesehen ist.

2. Brenner nach Anspruch 1, **dadurch gekennzeichnet, dass** koaxial zur ersten Kühlkammer (11) eine gemeinsame zweite Kühlkammer (12) angeordnet ist, die von der ersten Kühlkammer umgeben ist.

3. Brenner nach Anspruch 2, **dadurch gekennzeichnet, dass** zwischen der ersten und zweiten Kühlkammer mindestens ein Verbindungskanal (13, 14) für Kühlflüssigkeit besteht.

4. Brenner nach Anspruch 1 oder einem der folgenden, **dadurch gekennzeichnet, dass** eine erste Verteilkammer (2) für flüssigen Brennstoff angeordnet ist, mit welcher die Brennstoff führenden Rohre (3) verbunden sind.

5. Brennstoff nach Anspruch 1 oder einem der folgenden, **dadurch gekennzeichnet, dass** eine zweite Verteilkammer (5) für Wasserdampf angeordnet ist, mit welcher die Wasserdampf führenden Rohre (4) verbunden sind.

6. Brenner nach Anspruch 1 oder einem der folgenden, **dadurch gekennzeichnet, dass** eine dritte Verteilkammer (6) für sauerstoffhaltiges Gas angeordnet ist, mit welcher die Zuleitungen für sauerstoffhaltiges Gas verbunden sind.

7. Brenner nach Anspruch 2, **dadurch gekennzeichnet, dass** der Kanal (8) für den Hilfsbrenner von der zweiten Kühlkammer (12) umgeben ist.

## Claims

1. A burner for the partial oxidation of liquid, carbon-containing fuel by means of steam and an oxygen-containing gas, comprising at least two fuel-carrying tubes (3) which are arranged approximately in parallel, the distance between adjacent fuel-carrying tubes being 5 to 30 cm, each fuel-carrying tube being surrounded by a steam-carrying tube (4) and the orifice end (4a) of each steam-carrying tube having a supply line for oxygen-containing gas, and the steam-carrying tubes being surrounded by a common first cooling chamber (11) through which cooling liquid is passed, the first cooling chamber being in the form of an annular chamber and extending into the area of the orifice ends of the steam-carrying tubes, **characterised in that** at least one passage (8) for an insertable and removable auxiliary burner is provided.

2. A burner according to Claim 1, **characterised in that** a common second cooling chamber (12) is arranged coaxially to the first cooling chamber (11), which second chamber is surrounded by the first cooling chamber.

3. A burner according to Claim 2, **characterised in that** at least one connecting passage (13, 14) for cooling liquid is provided between the first and the second cooling chamber.

4. A burner according to Claim 1 or one of the following claims, **characterised in that** a first distribution chamber (2) for liquid fuel is provided, to which the fuel-carrying tubes (3) are connected.

5. A burner according to Claim 1 or one of the following claims, **characterised in that** a second distribution chamber (5) for steam is provided, to which the steam-carrying tubes (4) are connected.

6. A burner according to Claim 1 or one of the following claims, **characterised in that** a third distribution chamber (6) for oxygen-containing gas is provided, to which the supply lines for oxygen-containing gas are connected.

7. A burner according to Claim 2, **characterised in that** the passage (8) for the auxiliary burner is surrounded by the second cooling chamber (12).

## Revendications

1. Brûleur pour l'oxydation partielle de combustible carbonacé liquide par de la vapeur d'eau et par un gaz contenant de l'oxygène, comprenant au moins deux tuyaux (3) dans lesquels passe du combustible et qui sont à peu près parallèles, la distance entre les tuyaux (5) voisins dans lesquels passe du combustible allant de 5 à 30 cm, chaque tuyau dans lequel passe du combustible étant entouré d'un tuyau (4) dans lequel passe de la vapeur d'eau et en ce que chaque tuyau dans lequel passe de la vapeur d'eau a, à son extrémité (4a) d'embouchure, un conduit d'entrée de gaz contenant de l'oxygène et en ce que les tuyaux dans lesquels passe de la vapeur d'eau sont entourés d'une première chambre (11) commune de refroidissement dans laquelle on fait passer du liquide de refroidissement, la première chambre de refroidissement étant constituée en chambre annulaire et allant jusqu'à la zone des extrémités d'embouchure des tuyaux dans lesquelles passe de la vapeur d'eau, **caractérisé en ce qu'**il est prévu au moins un canal (8) pour un brûleur auxiliaire pouvant être inséré et pouvant être retiré.

2. Brûleur suivant la revendication 1, **caractérisé en ce qu'**il est disposé coaxialement à la première chambre (11) de refroidissement, une deuxième chambre (12) commune de refroidissement, qui est entourée de la première chambre de refroidissement.

3. Brûleur suivant la revendication 2, **caractérisé en ce qu'**il y a entre la première et la deuxième chambre de refroidissement au moins un canal (13, 14) de liaison pour du fluide de refroidissement.

4. Brûleur suivant la revendication 1 ou l'une des suivantes, **caractérisé en ce qu'**il est prévu une première chambre (2) de répartition du combustible liquide, par laquelle les tuyaux (3) dans lesquels passe du combustible communiquent.

5. Brûleur suivant la revendication 1 ou l'une des suivantes, **caractérisé en ce qu'**il est prévu une deuxième chambre (5) de répartition de la vapeur d'eau, par laquelle les tuyaux (4) dans lesquels passent de la vapeur d'eau communiquent.

6. Brûleur suivant la revendication 1 ou l'une des suivantes, **caractérisé en ce qu'**il est prévu une troisième chambre (6) de répartition de gaz contenant de l'oxygène, par laquelle les conduits d'entrée du gaz contenant de l'oxygène communiquent.

7. Brûleur suivant la revendication 2, **caractérisé en ce que** le canal (8) pour le brûleur auxiliaire est entouré de la deuxième chambre (12) de refroidissement.
